# EUROPEAN PATENT SPECIFICATION

(11) **EP 4 574 488 B1**
(45) Date of publication and mention of the grant of the patent: **01.07.2026**
(21) Application number: 23219198.1
(22) Date of filing: 21.12.2023
(51) Int. Cl.: B60K 1/04

(54) **A BATTERY CRASH PROTECTION ARRANGEMENT**
BATTERIE-AUFPRALLSCHUTZANORDNUNG
AGENCEMENT DE PROTECTION CONTRE LES CHOCS DE BATTERIE

(43) Date of publication of application: 25.06.2025
(73) Proprietor: VOLVO TRUCK CORPORATION, 405 08 Göteborg (SE)
(72) Inventor: MOCANOSKI, Dragan, 434 91 KUNGSBACKA (SE); JONZON, Daniel, 436 56 HOVÅS (SE); ALBERT, Ioana, 417 27 GÖTEBORG (SE)
(74) Representative: Kransell & Wennborg KB

(56) References cited:
- EP-A1- 3 925 807
- EP-A1- 3 981 631
- WO-A1-2021/091448
- US-A1- 2008 160 396
- US-A1- 2022 169 104

## Description

### TECHNICAL FIELD

The disclosure relates generally to generally to traction batteries. In particular aspects, the disclosure relates to a crash protection arrangement for a traction battery of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of vulnerable for external damage, and there is a challenged to provide sufficient protection for the batteries which is simple to assemble and comprises a reduced number of components to reduce an overall cost for the vehicle.

Examples of prior art are disclosed in US 2022/169104 A1, EP 3 981 631 A1, EP 3 925 807 A1, WO 2021/091448 A1, and US 2008/160396 A1.

### SUMMARY

According to a first aspect of the disclosure, there is provided a battery crash protection arrangement for a traction battery of a vehicle, the battery crash protection arrangement comprising a crash protection frame comprising a first frame portion, a second frame portion, a third frame portion and a fourth frame portion forming an envelope frame, each of the first, second, third and fourth frame portions extends in longitudinal direction between respective first and second ends, each of the first and second frame portions extends from the third frame portion to the fourth frame portion, a crash protection plate, the crash protection plate spanning between the first, second, third and fourth frame portions of the envelope frame, a first rod arranged in a first aperture of the crash protection frame, the first aperture being arranged in the third frame portion and extending from the first end of the third frame portion, and a second rod arranged in a second aperture of the crash protection frame, the second aperture being arranged in the fourth frame portion and extending from the first end of the fourth frame portion, and a first rod connector element comprising a first portion rotationally connected to the first rod, and a second portion, arranged on an opposite side compared to the first portion, the second portion being configured to connect to a first secondary rod, and a second rod connector element comprising a first portion rotationally connected to the second rod, and a second portion, arranged on an opposite side compared to the first portion, the second portion being configured to connect to a second secondary rod, wherein the first rod connector element protrudes out from the first aperture and the second rod connector element protrudes out from the second aperture.

The first aspect of the disclosure may seek to mitigate the risk of external damage potentially exposed to the traction battery, and to reduce the weight and cost of a crash protection arrangement serving the purpose of providing a sufficient protection of such potential external damage. The first aspect also aims at simplifying the assemble and manufacturing process for a crash protection arrangement. A technical benefit may include that the crash protection plate spanning between the portions of the envelope frame can sufficiently protect the traction battery from e.g. stone impact or an impact from a smaller rock, etc., projected from the ground towards a lower surface of the traction battery, or from other obstacles that can hit the lower surface of the traction battery such as protruding ramps, railroad crossings, speed bumps, etc. Also, the battery crash protection arrangement comprises a reduced number of components, thereby providing an arrangement with a relatively low weight and, as will be evident from the below described third aspect, enable for a simple manufacturing method for assembling the battery crash protection arrangement.

Further, by connecting the first and second rod connector elements to a respective first and second rod, and arrange the first and second rods in a respective first and second aperture, the battery crash protection arrangement can be prepared for connection to a further, secondary crash protection frame. Since the first and second rod connector elements protrudes out from the respective first and second aperture, the connector element can efficiently guide the secondary frame to its intended position where a first and second secondary rod connects to the rod connector elements. Thus, a relatively large battery crash protection arrangement can be provided where the crash protection frame can be connected blind to the secondary crash protection frame.

The above described first end of the third and fourth frame portions should preferably be construed as end portions having a free end such that the aperture can be visually identified, at least before connected to the above described secondary crash protection frame. The first and second ends of the first and second frame portions may however not be end portions having a free end. Conversely, the first and second ends of the first and second frame portions may be connected to, or integrated with, the third and fourth frame portions, respectively. The second end of the third and fourth frame portions may advantageously be a respective end portion with a free end. The envelope frame may advantageously be a non-disruptive frame.

Optionally in some examples, including in at least one preferred example, the second portion of each of the first and second rod connector element comprises internal threads configured to rotationally connect the first and second rod connector element to the respective first and second secondary rod. A technical benefit may include that the first and second secondary rods can be securely connected to the respective first and second rod connector element, and as such assembled to the first and second rods. Obviously, the first and second secondary rods comprises external threads matching with the internal threads of the second portion in such example.

Optionally in some examples, including in at least one preferred example, the first aperture extends from the first end in a direction towards the second end of the third frame portion, and wherein the second aperture extends from the first end in a direction towards the second end of the fourth frame portion.

Optionally in some examples, including in at least one preferred example, the first aperture is a first through hole extending between the first and second ends of the third frame portion, and wherein the second aperture is a second through hole extending between the first and second ends of the fourth frame portion. A technical benefit may include that each of the first and second rod connector elements can be pre-assembled to the respective first and second rods. Thereafter, the first and second rods can be guided through the respective first and second through holes, where the first and second rods may be attached at the second end of the respective third and fourth frame portions with a suitable connector element, such as e.g. a nut.

Optionally in some examples, including in at least one preferred example, the first portion of the first rod connector element is arranged in the first aperture, and wherein the first portion of the second rod connector element is arranged in the second aperture.

Optionally in some examples, including in at least one preferred example, the first portion of the first rod connector element is rotationally fixed to the first aperture, and wherein the first portion of the second rod connector element is rotationally fixed to the second aperture. A technical benefit may include that the first and second secondary rods can be blind connected to the respective first and second rod connector elements, i.e. connected without visual surveillance and without use of an external tool which may be difficult to fit in an interface between the crash protection frame and a secondary crash protection frame when connecting such secondary crash protection frame to the crash protection frame.

Optionally in some examples, including in at least one preferred example, the battery crash protection arrangement further comprising an intermediate frame portion extending in a longitudinal direction between respective first and second ends, the intermediate frame portion being arranged between the third and fourth frame portions and extending from the first frame portion to the second frame portion. A technical benefit may include that an increased rigidity of the battery crash protection arrangement may be obtained.

Optionally in some examples, including in at least one preferred example, the battery crash protection arrangement further comprising an intermediate rod arranged in an intermediate aperture, the intermediate aperture being arranged in the intermediate frame portion and extending from the first end of the intermediate frame portion.

Optionally in some examples, including in at least one preferred example, the battery crash protection arrangement further comprising an intermediate rod connector element comprising a first portion rotationally connected to the intermediate rod, and a second portion, arranged on an opposite side compared to the first portion, the second portion being configured to connect to an intermediate secondary rod, wherein the intermediate rod connector element protrudes out from the intermediate aperture.

Optionally in some examples, including in at least one preferred example, the intermediate frame portion is welded to each of the first and second frame portions. A technical benefit may include that the third and fourth frame portions, preferably including parts of the first and second frame portions, can be manufactured as separate parts, which is subsequently welded to the intermediate frame portion, thereby enabling for a simplified manufacturing process.

Optionally in some examples, including in at least one preferred example, the battery crash protection arrangement further comprising a secondary crash protection frame, comprising a first secondary frame portion, a second secondary frame portion, a third secondary frame portion and a fourth secondary frame portion forming an secondary envelope frame, each of the first, second, third and fourth secondary frame portions extends in longitudinal direction between respective first and second ends, each of the first and second secondary frame portions extends from the third secondary frame portion to the fourth secondary frame portion. A technical benefit, as also indicated above, may include that the battery crash protection arrangement can be connected to a relatively large traction battery. Such large traction battery in turn enables for a longer operational range for a vehicle using at least an electric traction motor for propulsion. Also, by providing a crash protection frame and a secondary crash protection frame, the two crash protection frames can be manufactured as separate modules, thereby avoiding large and bulky arrangements. The modularity of connecting a plurality of crash protection frames to each other is also provided.

Optionally in some examples, including in at least one preferred example, the battery crash protection arrangement further comprising a secondary crash protection plate spanning between the first, second, third and fourth secondary frame portions of the secondary envelope frame.

Optionally in some examples, including in at least one preferred example, the battery crash protection arrangement further comprising a first secondary aperture and a second secondary aperture arranged in the secondary crash protection frame, the first secondary aperture being arranged in the third secondary frame portion and extending from the first end of the third secondary frame portion, and the second secondary aperture being arranged in the fourth secondary frame portion and extending from the first end of the fourth secondary frame portion.

Optionally in some examples, including in at least one preferred example, the battery crash protection arrangement further comprising the first and second secondary rods, the first secondary rod being arranged in the first secondary aperture and connected to the second portion of the first rod connector element, and the second secondary rod being arranged in the second secondary aperture and connected to the second portion of the second rod connector element.

Optionally in some examples, including in at least one preferred example, the crash protection frame is formed by extruded metal portions. A technical benefit may include that, as also indicated above, a lower number of components can be provided, in particular the reduced need of connector elements for connecting frame portions to each other.

According to a second aspect, there is provided a vehicle comprising a battery crash protection arrangement of any one of the examples described above in relation to the first aspect.

Optionally in some examples, including in at least one preferred example, the vehicle further comprises a traction battery, wherein the battery crash protection arrangement is arranged vertically below the traction battery. A technical benefit may include that the traction battery is protected from damage potentially coming from below.

Optionally in some examples, including in at least one preferred example, the traction battery is a first traction battery connected to a first longitudinal frame member of a pair of longitudinal frame members of the vehicle, the vehicle further comprising a second traction battery connected to a second longitudinal frame member of the pair of longitudinal frame members, the first and second traction batteries being arranged on opposite lateral sides of the pair of longitudinal frame members and on same longitudinal position of the pair of longitudinal frame members. A technical benefit may include that a large number of traction batteries can be connected to the frame members of the vehicle.

Effects and features of the second aspect are largely analogous to those described above in relation to the first aspect.

According to a third aspect, there is provided a method of manufacturing a battery crash protection arrangement, the method comprising extruding at least a first metal portion and a second metal portion to form a first longitudinally extending sheet of material with a first aperture arranged at a first end thereof, and a second longitudinally extending sheet of material with a second aperture arranged at a first end thereof, stamping the first and second metal portions to form a first frame portion, a second frame portion, a third frame portion and a fourth frame portion, connecting the first frame portion of the first metal portion to the first frame portion of the second metal portion, and connecting the second frame portion of the first metal portion to the second frame portion of the second metal portion to form an envelope frame, spanning a crash protection plate to the envelope frame, connecting a first portion of a first rod connector element to a first rod, connecting a first portion of a second rod connector element to a second rod, inserting the first rod to the first aperture such that a second portion, arranged on an opposite side compared to the first portion, of the first rod connector element protrudes out from the first aperture, and inserting the second rod to the second aperture such that a second portion, arranged on an opposite side compared to the first portion, of the first rod connector element protrudes out from the second aperture.

The third aspect of the disclosure may seek to provide a simplified manufacturing method for a assembling a battery crash protection arrangement. The manufacturing method enables the use of a reduced number of components which results in an assembled battery crash protection arrangement with a relatively low weight and reduced number of attachment elements. Reducing the number of attachment elements is advantageous since such attachment elements could otherwise loosen during operation of the vehicle with the resulting risk of a non-secure battery protection arrangement.

Optionally in some examples, including in at least one preferred example, the method further comprises inserting a first secondary rod through a first secondary aperture of a secondary crash protection frame, and a second secondary rod through a second secondary aperture of the secondary crash protection frame, and connecting the secondary crash protection frame to the crash protection frame by connecting the first secondary rod to the second portion of the first connector rod element, and connecting the second secondary rod to the second portion of the second connector rod element.

Further effects and features of the third aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary exploded view of an energy storage system connected to a frame of the vehicle according to an example,
Fig. 3 is an exemplary illustration of a crash protection arrangement according to an example,
Figs. 4A - 4B are exemplary illustrations of a rod connector element of the battery crash protection arrangement according to an example,
Fig. 5 is an exemplary illustration of a crash protection arrangement according to an example,
Figs. 6A - 6B are exploded views of a battery crash protection arrangement and its manufacturing method according to an example, and
Fig. 7 is an exemplary flow chart of a method of manufacturing the battery crash protection arrangement according to an example.

### DETAILED DESCRIPTION

The detailed description set forth below provides information and examples of the disclosed technology with sufficient detail to enable those skilled in the art to practice the disclosure.

The disclosure described in the following aims at providing a battery crash protection arrangement which is simple to manufacture and which comprises a reduced number of components, while still enable for sufficient rigidity and strength to absorb potential external loads that could otherwise damage the traction battery.

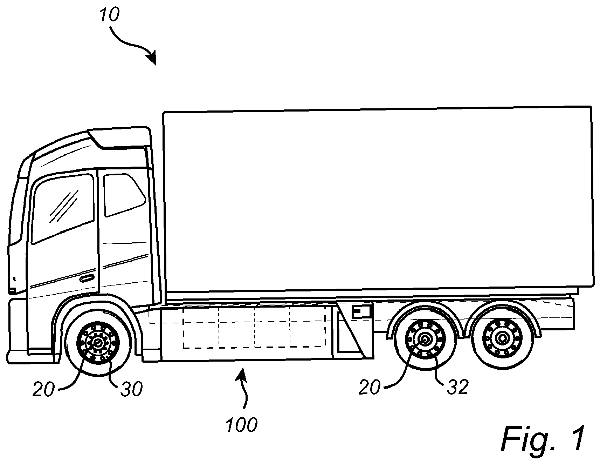

Turning to Fig. 1, which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft (not shown). The at least one electric traction motor 20 is configured to apply a propulsive power to the wheels of the vehicle during propulsion, and to generate electric power during braking.

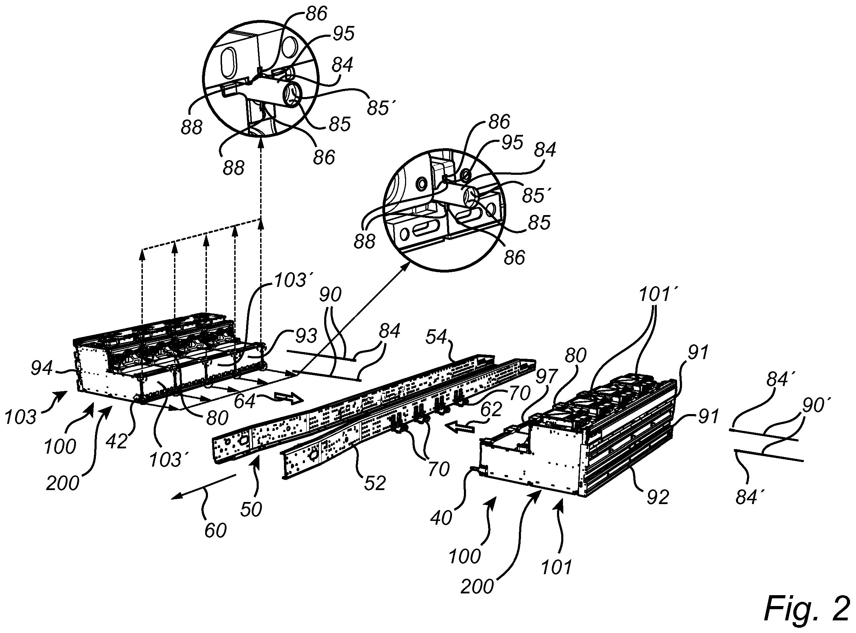

The vehicle further comprises an energy storage system 100. The energy storage system 100 is configured to feed electric power to the electric traction motor 20 during propulsion of the vehicle 10 and to receive electric power during braking. In order to describe the connection of the energy storage system 100 to the frame of the vehicle 10, reference is now made to Fig. 2.

Fig. 2 is an exemplary exploded view of the energy storage system 100 connected to the frame 50 of the vehicle 10 according to an example. In particular, a first energy storage system 101 is arranged at a first lateral side of the frame 50, and a second energy storage system 103 is arranged at a second lateral side of the frame 50. The exemplified frame 50 comprises a pair of longitudinal frame members 52, 54. Put it differently, the frame 50 comprises a first longitudinal frame member 52 and a second longitudinal frame member 54, wherein each of the first 52 and second 54 longitudinal frame members extends in the longitudinal direction 60 of the vehicle 10. Thus, the first energy storage system 101 is connected to the first longitudinal frame member 52 and the second energy storage system 103 is connected to the second longitudinal frame member 54. Further, a plurality of vehicle frame supports 70 are connected to each of the first 52 and second 54 longitudinal frame members. Also, each of the first 101 and second 103 energy storage systems comprises a plurality of support brackets 80. The longitudinal distance between the plurality of vehicle frame supports 70 is substantially the same as the respective longitudinal distance between the plurality of support brackets 80 of the first 101 and second 103 energy storage systems.

When connecting the first 101 and second 103 energy storage systems to the frame 50, the first energy storage system 101 is moved laterally in a first direction 62 towards the first frame member 52, and the second energy storage system 103 is moved laterally in a second direction 64 towards the second frame member 54. The first 101 and second 103 energy storage systems are connected to the frame 50 by arranging each of the plurality of support brackets 80 in abutment with a respective vehicle frame support 70 of the first 52 and second 54 longitudinal frame members.

Before arranging each of the plurality of support brackets 80 in abutment with the respective vehicle frame support 70, a plurality of first set of bars 90, of which only two bars are depicted in Fig. 2, is guided laterally through a respective hole 95 in the second energy storage system 103 from a laterally inner side 93 to a laterally outer side 94 of the second energy storage system 103. Each bar of the first set of the bars 90 is rotationally connected to a threaded sleeve 84, i.e. threaded to internal threads 85 of the threaded sleeve 84. The threaded sleeves 84 are rotationally fixed in the hole 95 at the laterally inner side 93. The exemplified threaded sleeves 84 comprises a pair of radially protruding portions 86 arranged in a respective recess 88 of the hole 95 to prevent the threaded sleeves 84 from rotating. Other means for preventing rotation are also conceivable, such as e.g. a threaded sleeve in the form of a hexagonal nut arranged in a respective hexagonal portion of the hole 95, etc. When the first set of bars 90 is arranged laterally through the second energy storage system 103, the bars of the first set of bars 90 can be fixated at the laterally outer side 94 of the second energy storage system 103 by e.g. a nut (not shown) tightening the bars.

Thereafter, a second set of bars 90', of which only two bars are depicted in Fig. 2, is guided laterally through a respective hole 91 in the first energy storage system 101 from a laterally outer side 92 to a laterally inner side 97 of the first energy storage system 101. Each bar of the second set of bars 90' comprises a threaded portion 84'. The threaded portion 84' of the second set of bars 90' is, after the bars are guided laterally through the holes 91 in the first energy storage system 101, threaded to a second set of the internal threads 85' of the threaded sleeve 84. Hereby, the first set of bars 90 is connected to the second set of bars 90' via the threaded sleeves 84. When the second set of bars 90' is connected to the sleeves 84, the bars 90' can be fixated at the laterally outer side 91 of the first energy storage system 101 by e.g. a nut (not shown) tightening the bars.

The energy storage system 100 may also comprise a plurality of guiding pins 40. The exemplified guiding pins 40 in Fig. 2 are arranged at the laterally inner side 97 of the first energy storage system 101 and extends towards the second energy storage system 103. The second energy storage system 103 may comprise a respective plurality of guiding apertures 42 arranged at the laterally inner side 93 of the second energy storage system 103. When connecting the first 101 and second energy storage systems to each other, the guiding pins 40 can assist the operator to correctly position the first energy storage system 101 relative to the second energy storage system 103 before guiding the second set of bars 90' laterally through the holes 91 of the first traction battery 101.

Each of the first 101 and second 103 energy storage arrangements may be formed by a plurality of traction batteries 101', 103'. In the example depicted in Fig. 2, the first energy storage system 101 comprises four first traction batteries 101' and the second energy storage system 103 comprises four second traction batteries 103'. The first 101' and second 103' traction batteries may also be referred to as first and second battery modules, respectively. The traction batteries may be sensitive to loads from below the vehicle, such as e.g. rocks, stones, etc. The following will describe a battery crash protection arrangement 200 that can be advantageously connected to a lower, downward facing, side of the traction batteries.

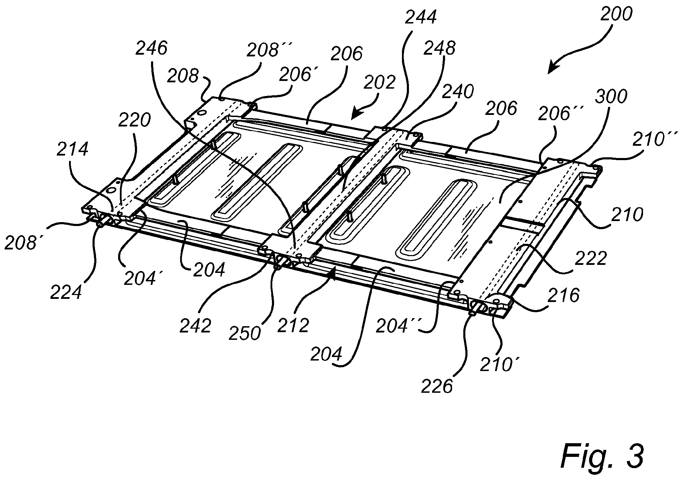

Reference is now made to Fig. 3, which is an exemplary illustration of a crash protection arrangement according to an example. The assembled and manufactured battery crash protection arrangement 200 illustrated in Fig. 3 in comprises a crash protection frame 202 and a crash protection plate 300. The exemplified crash protection frame 202 comprises a first frame portion 204, a second frame portion 206, a third frame portion 208 and a fourth frame portion 210. The first 204, second 206, third 208 and fourth 210 frame portions together form an envelope frame 212 of the crash protection frame 202. The crash protection plate 300 is spanning between the first 204, second 206, third 208 and fourth 210 frame portions of the envelope frame 212. Preferably, the crash protection plate 300 is attached to at least a portion of the envelope frame 212. Also, the crash protection frame 202 may preferably be made of a material having a lower elastic modulus compared to the elastic modulus of the crash protection plate 300. Preferably, the crash protection frame 202 may be made by aluminum while the crash protection plate 300 may be made of steel. Other material options are of course conceivable.

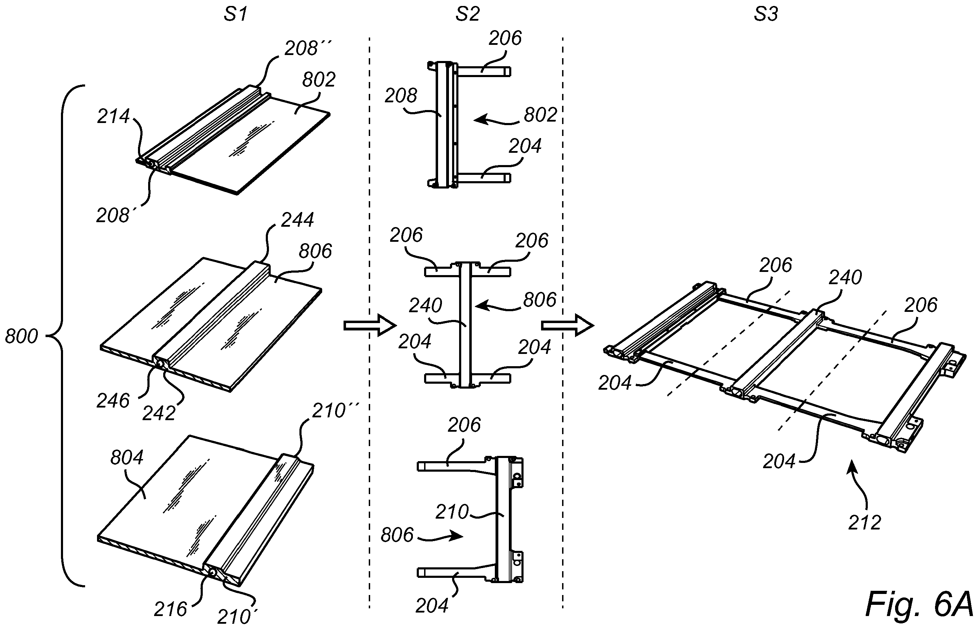

As can be seen in Fig. 3, each of the first 204, second 206, third 208 and fourth 210 frame portions each extends between respective first and second ends. In particular, the first frame portion 204 extends longitudinally between first 204' and second 204" first ends of the first frame portion 204, the second frame portion 206 extends longitudinally between first 206' and second 206" second ends of the second frame portion 206, the third frame portion 208 extends longitudinally between first 208' and second 208" third ends of the third frame portion 208, and the fourth frame portion 210 extends longitudinally between first 210' and second 210" fourth ends of the fourth frame portion 210. As is evident from Fig. 3, the first 208' and second 208'' third ends, as well as the first 210' and second 210" fourth ends may advantageously be free ends, while the first 204' and second 204" first ends as well as the first 206' and second 206" second ends may advantageously face a portion of the respective third 208 and fourth 210 frame portions, i.e. non-free ends. The first 204' and second 204" first ends and the first 206' and second 206" second ends may be an integrated part of the respective third 208 and fourth 210 frame portions, as will be evident from the below disclosure in relation to Figs. 6A - 7.

Further, the exemplified first 204 and second 206 frame portions may be substantially parallel with each other. In a similar manner, the third 208 and fourth 210 frame portions may be substantially parallel with each other. Each of the first 204 and second 206 frame portions may in addition be substantially perpendicular to each of the third 208 and fourth 210 frame portions. Advantageously, the envelope frame 212 may be arranged in a rectangular shape. In a similar vein, the crash protection plate 300 may advantageously also be arranged in a rectangular shape.

Moreover, the crash protection arrangement 200 also comprises a first aperture 214 and a second aperture 216. The first aperture 214 is arranged in the third frame portion 208, while the second aperture 216 is arranged in the fourth frame portion 210. In detail, the first aperture 214 is arranged in the first end 208' of the third frame portion 208 and extends towards the second end 208'' of the third frame portion 208, i.e. from the first end 208' and in a direction towards the second end 208" of the third frame portion 208. Preferably, the first aperture 214 may be a first through hole extending from the first end 208' to the second end 208" of the third frame portion 208. In a similar vein, the second aperture 216 is arranged in the first end 210' of the fourth frame portion 210 and extends towards the second end 210" of the fourth frame portion 210, i.e. from the first end 210' and in a direction towards the second end 210" of the fourth frame portion 210. Preferably, the second aperture 216 may be a second through hole extending from the first end 210' to the second end 210" of the fourth frame portion 210.

The exemplified crash protection arrangement 200 in Fig. 3 may also comprise an optional intermediate frame portion 240. The intermediate frame portion 240 is exemplified as arranged laterally between the third 208 and fourth 210 frame portions and extends between the first 204 and second 206 frame portions. In detail, the intermediate frame portion 240 extends longitudinally between a first end 242 and a second end 244 of the intermediate frame portion 240. Each of the first 242 and second 244 ends of the intermediate frame portion 240 may be free ends. In the exemplified Fig. 3 when including the optional intermediate frame portion 240, the first frame portion 204 advantageously comprises a pair of first frame portion 204, and the second frame portion 206 advantageously comprises a pair of second frame portion 206. In such case, the intermediate frame portion 240 may be welded to each of the first 204 and second 206 frame portions. Alternatively, the first 242 and second 244 ends of the intermediate frame portion 240 may be construed as arranged between the first 204 and second 206 frame portions. In such example, the first 242 and second 244 ends of the intermediate frame portion 240 are non-free ends, but rather first 242 and second 244 ends that face the first 204 and second 206 frame portions, respectively.

The crash protection arrangement 200 may also comprise an optional intermediate aperture 246 arranged in the intermediate frame portion 240. The intermediate aperture 246 is arranged in the first end 242 of the intermediate frame portion 240 and extends towards the second end 244 of the intermediate frame portion 240, i.e. from the first end 242 and in a direction towards the second end 244 of the intermediate frame portion 240. Preferably, the intermediate aperture 246 may be a first through hole extending from the first end 242 to the second end 244 of the intermediate frame portion 240. In the above example in which the first 242 and second 244 ends of the intermediate frame portion 240 are construed as non-free ends, the intermediate aperture extends from the first frame portion 204 to the second frame portion 206 via the intermediate frame portion 240.

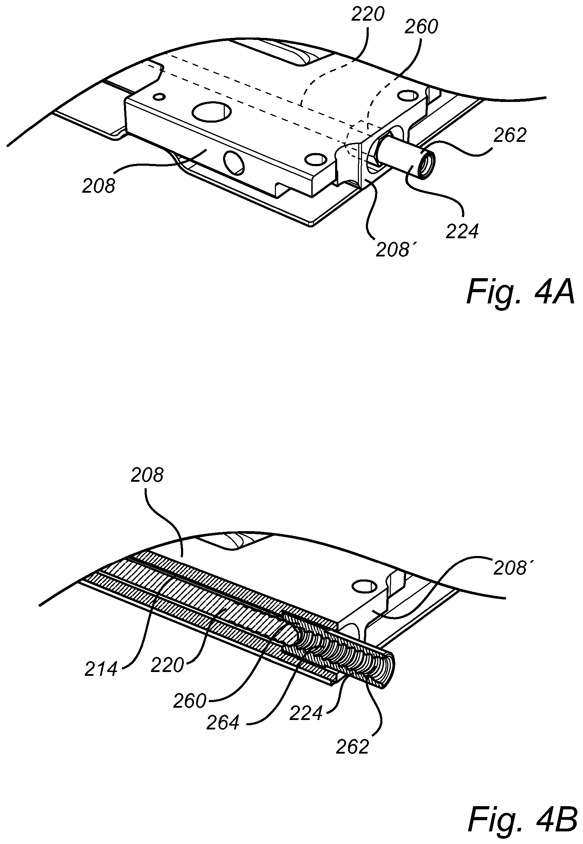

The crash protection arrangement 200 further comprises a first rod 220 and a second rod 222. The first 220 is arranged in the above described first aperture 214, and the second rod 222 is arranged in the above described second aperture 216. As will be described in further detail below in relation to Figs. 4A and 4B, the crash protection arrangement 200 also comprises a first rod connector element 224 connected to the first rod 220 and a second rod connector element 226 connected to the second rod 220. The crash protection arrangement 200 may also comprise an optional intermediate rod 248 arranged in the intermediate aperture 246. An intermediate rod connector element 250 may also be provided. The intermediate rod connector element 250 is connected to the intermediate rod 248.

Reference is now made to Figs. 4A - 4B, which are exemplary illustrations of the first rod connector element 224 of the battery crash protection arrangement 200 according to an example. The following will thus describe the first rod connector element 224, but the features of the first rod connector element 224 should be construed as preferably also forming part of the second rod connector element 226 as well as the intermediate rod connector element 250. In a similar manner, the features of the first aperture 214 described in the following may preferably also form part of the second aperture 216 as well as the intermediate aperture 246. The rod connector elements may each be arranged as respective sleeves.

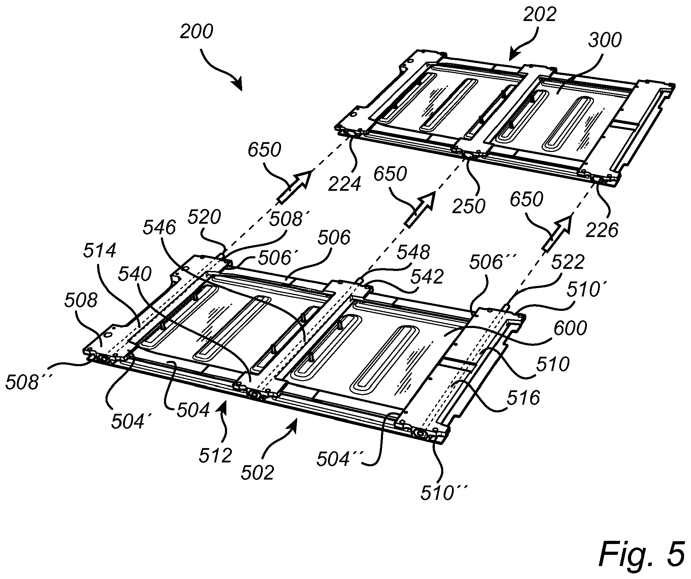

As can be seen in Figs. 4A - 4B, the first rod connector element 224 comprises a first portion 260 and a second portion 262. The first portion 260 of the first rod connector element 224 is rotationally connected to the first rod 220, and the second portion 262 is configured to connect to a first secondary rod (see 520 in Fig. 5). The first rod connector element 224 preferably comprises internal threads 264 to rotationally connect the first rod connector element 224 to the first rod 220.

The first 260 and second 262 portions of the first rod connector element 224 are arranged on opposite side of the first rod connector element 224, i.e. on opposite sides in a longitudinal extension of the first rod connector element 224. As detailed in Figs. 4A - 4B, the first portion 260 of the first rod connector element 224 is arranged in the first aperture 214 while the second portion 262 of the first rod connector element 224 protrudes from the first aperture 214.

The first portion 260 of the first rod connector element 224 may preferably be rotationally fixed to the first aperture 214. In the example depicted in Fig. 4A, an external surface of the first portion 260 of the first rod connector element 224 may be arranged in the form of a hexagonal nut, wherein the portion of the aperture 214 housing the first portion 260 is also arranged in a hexagonal shape. Other designs for preventing rotation between the first rod connector element 224 and the first aperture 214 are also conceivable, such as e.g. one or more radially extending pins arranged on the first rod connector element 224, which radially extending pins are positioned in respective recess portion of the first aperture 214.

Reference is now made to Fig. 5 which is an exemplary illustration of the crash protection arrangement 200 according to another example. In addition to the features described above, the crash protection arrangement in Fig. 5 comprises a secondary crash protection frame 502. The secondary crash protection frame 502 comprises a first secondary frame portion 504, a second secondary frame portion 506, a third secondary frame portion 608 and a fourth secondary frame portion 510. The first 504, second 506, third 508 and fourth 510 secondary frame portions forms a secondary envelope frame 512. Moreover, each of the first 504, second 506, third 508 and fourth 510 secondary frame portions extends in longitudinal direction between respective first and second ends. In particular, the first secondary frame portion 504 extends longitudinally between first 504' and second 504" first secondary ends of the first secondary frame portion 504, the second secondary frame portion 506 extends longitudinally between first 506' and second 506'' second secondary ends of the second secondary frame portion 506, the third secondary frame portion 508 extends longitudinally between first 508' and second 508'' third secondary ends of the third secondary frame portion 508, and the fourth secondary frame portion 510 extends longitudinally between first 510' and second 510" fourth secondary ends of the fourth secondary frame portion 510. As is evident from Fig. 5, the first 508' and second 508'' third secondary ends, as well as the first 510' and second 510'' fourth secondary ends may advantageously be free ends, while the first 504' and second 504'' first secondary ends as well as the first 506' and second 506'' second secondary ends may advantageously face a portion of the respective third 508 and fourth 510 secondary frame portions, i.e. non-free ends. The first 504' and second 504" first secondary ends and the first 506' and second 506'' second secondary ends may be an integrated part of the respective third 508 and fourth 510 secondary frame portions.

The example in Fig. 5 also comprises a secondary crash protection plate 600. The secondary crash protection plate 600 is spanning between the first 504, second 506, third 508 and fourth 510 secondary frame portions of the secondary envelope frame 512. Preferably, the secondary crash protection plate 600 is attached to at least a portion of the secondary envelope frame 512. In a similar vein as described above, the secondary crash protection frame 502 may preferably be made of a material having a lower elastic modulus compared to the elastic modulus of the secondary crash protection plate 600. Preferably, the secondary crash protection frame 502 may be made by aluminum while the secondary crash protection plate 600 may be made of steel. Other material options are of course conceivable.

Moreover, the crash protection arrangement 200 exemplified in Fig. 5 comprises a first secondary aperture 514 and a second secondary aperture 516 arranged in the secondary crash protection frame 502. In particular, the first secondary aperture 514 is arranged in the third secondary frame portion 508 and extends from the first end 508' of the third secondary frame portion 508, while the second secondary aperture 516 is arranged in the fourth secondary frame portion 510 and extends from the first end 510' of the fourth secondary frame portion 510. Optionally, and as depicted in Fig. 5, the crash protection arrangement 200 may comprise an intermediate secondary frame portion 540, arranged in a similar manner as the intermediate frame portion 240 described above in relation to Fig. 3. The crash protection arrangement 200 may also comprise an optionally intermediate secondary aperture 546 arranged in intermediate secondary frame portion 540. The optional intermediate secondary aperture 546 may extend from a first end 542 of the intermediate secondary frame portion 540.

The battery crash protection arrangement in Fig. 5 further comprises the above described first secondary rod 520. The exemplified battery crash protection arrangement 200 also comprises a second secondary rod 522 and optionally an intermediate secondary rod 548. The first secondary rod 520 is arranged in the first secondary aperture 514, the second secondary rod 522 is arranged in the second secondary aperture 516, and the intermediate secondary rod 548 is arranged in the intermediate secondary aperture 546. The first 520, second 522 and intermediate 548 secondary rods may each preferably protrude from the second secondary frame portion 506.

After moving the secondary crash protection frame 502 in a direction 650 towards the above described crash protection frame 202, the first secondary rod 520 can be connected to the above described second portion 262 of the first rod connector element 224. In a similar vein, the second secondary rod 522 can be connected to a second portion of a second rod connector element arranged in the second aperture 216, and the intermediate secondary rod 548 can be connected to a second portion of an intermediate rod connector element arranged in the intermediate aperture 250. Each of the first 520, second 522 and intermediate 548 secondary rods may be connected to the respective rod connector element by applying a torque at the end portion of the respective secondary rods that are arranged in the vicinity of the first secondary frame portion 504.

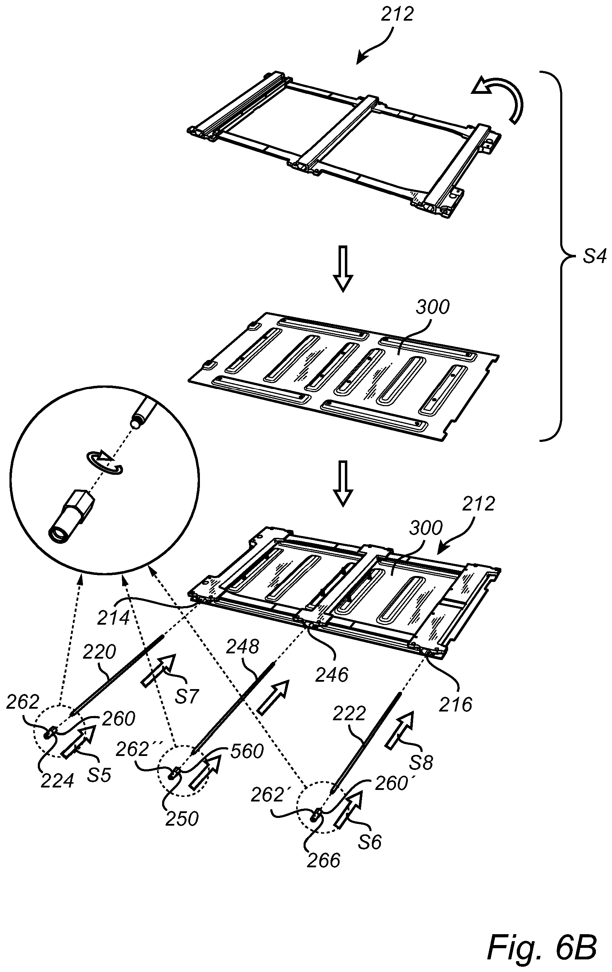

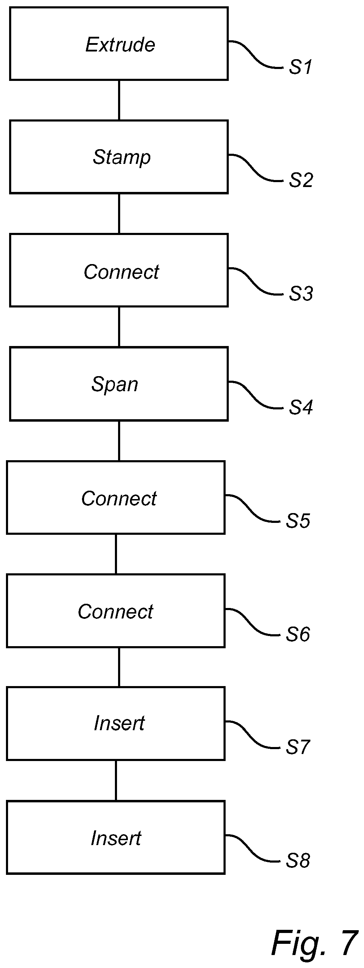

In order to describe a method of manufacturing the above described crash protection arrangement 200, reference is now made to Figs. 6A, 6B and 7. Figs. 6A - 6B are exploded views of a battery crash protection arrangement and its manufacturing method according to an example, and Fig. 7 is an exemplary flow chart of a method of manufacturing the battery crash protection arrangement according to an example.

The above described crash protection frame 202 is preferably formed from a sheet of metal material 800. In particular, at least a first metal portion 802 and a second metal portion 804 is extruded S1. The first metal portion 802 portion forms a first longitudinally extending sheet of material. By the extrusion, a first aperture 214 is formed in the first metal portion 802. The first aperture 214 is arranged from a first end 208' to a second end 208". In a similar vein, the second metal portion 804 portion forms a second longitudinally extending sheet of material. By the extrusion, a second aperture 216 is formed in the second metal portion 804. The second aperture 216 is arranged from a first end 210' to a second end 210''. Optionally, a third metal portion 806 may also be extruded. The third metal portion 806 comprises an intermediate aperture 246 arranged between a first 242 and a second 244 end.

Each of the first 802 and second 804 metal portions is thereafter stamped S2 to form a first frame portion 204, a second frame portion 206, a third frame portion 208 and a fourth 210 frame portion. When stamping the first 802 and second 804 metal portions, each of the first 802 and second 804 metal portions may comprise a first frame portion, and each of the first 802 and second 804 metal portions may also comprise a second frame portion. When stamping the first 802 and second 804 metal portions, an intermediate frame portion 240 may also be formed.

The first frame portion 204 of the first metal portion 802 is thereafter connected S3 to the first frame portion 204 of the second metal portion 804. In a similar vein, the second frame portion 206 of the first metal portion 802 connected S4 to the second frame portion 206 of the second metal portion 804. In the example, the intermediate frame portion is arranged between the first frame portion 204 of the first 802 and second 804 metal portions. Hence, the first frame portion 204 of the first metal portion 802 is connected to the first frame portion 204 of the second metal portion 804 via the intermediate frame portion 240. The same applies for the connection between the second frame portion 206 of the first metal material 802 and the second portion 206 of the second metal material 804. The connection may be made via a welding process.

An envelope frame 212 is hereby formed and a crash protection plate is spanned S4 to the envelope frame 212.

Thereafter, a first portion 260 of a first rod connector element 224 is connected S5 to a first rod 220. In a similar vein, a first portion 260' of a second rod connector element 260' is connected S6 to a second rod 222. Optionally, a first portion 560 of an intermediate rod connector element 250 may be connected to an intermediate rod 248.

The first rod 220 is thereafter inserted S7 to the first aperture 214. The first rod 220 is inserted to the first aperture 214 in such a way that a second portion 262 of the first rod connector element 224 protrudes out from the first aperture 214. In a similar manner, the second rod 222 is inserted S8 to the second aperture 216. The second rod 222 is inserted to the second aperture 216 in such a way that a second portion 262' of the second rod connector element 226 protrudes out from the second aperture 216. Optionally, the intermediate rod 248 is inserted to the intermediate aperture 246. The intermediate rod 248 is preferably inserted to the intermediate aperture 246 in such a way that a second portion 262'' of the intermediate rod connector element 250 protrudes out from the intermediate aperture 246.

The method may be followed by inserting a first secondary rod 520 (Fig. 5) through a first secondary aperture of a secondary crash protection frame described above in relation to Fig. 5. Also, a second secondary rod 522 is inserted through a second secondary aperture of the secondary crash protection frame. Also, the secondary crash protection frame is connected to the crash protection frame by connecting the first secondary rod to the second portion of the first connector rod element, and connecting the second secondary rod to the second portion of the second connector rod element.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A battery crash protection arrangement (200) for a traction battery (100) of a vehicle (10), the battery crash protection arrangement comprising:
- a crash protection frame (202) comprising a first frame portion (204), a second frame portion (206), a third frame portion (208) and a fourth frame portion (210) forming an envelope frame (212), each of the first, second, third and fourth frame portions extends in longitudinal direction between respective first (204', 206', 208', 210') and second (204", 206", 208", 210") ends, each of the first (204) and second (206) frame portions extends from the third frame portion (208) to the fourth frame portion (210),
- a crash protection plate (300), the crash protection plate spanning between the first (204), second (206), third (208) and fourth (210) frame portions of the envelope frame,
the battery crash protection arrangement **characterised in that** it further comprises
- a first rod (220) arranged in a first aperture (214) of the crash protection frame (202), the first aperture (214) being arranged in the third frame portion (208) and extending from the first end (208') of the third frame portion, and a second rod (222) arranged in a second aperture (216) of the crash protection frame, the second aperture (216) being arranged in the fourth frame portion (210) and extending from the first end (210') of the fourth frame portion, and
- a first rod connector element (224) comprising a first portion (260) rotationally connected to the first rod (220), and a second portion (262), arranged on an opposite side compared to the first portion, the second portion (262) being configured to connect to a first secondary rod (520), and a second rod connector element (226) comprising a first portion rotationally connected to the second rod, and a second portion (262), arranged on an opposite side compared to the first portion, the second portion being configured to connect to a second secondary rod (522), wherein the first rod connector element (224) protrudes out from the first aperture (224) and the second rod connector element (226) protrudes out from the second aperture (226).

2. The battery crash protection arrangement of claim 1, wherein the first aperture (214) extends from the first end (208') in a direction towards the second end (208'') of the third frame portion (208), and wherein the second aperture (216) extends from the first end (210') in a direction towards the second end (210") of the fourth frame portion (210).

3. The battery crash protection arrangement of any one of the preceding claims, wherein the first portion (260) of the first rod connector element (224) is arranged in the first aperture (214), and wherein the first portion of the second rod connector element (226) is arranged in the second aperture (216).

4. The battery crash protection arrangement of claim 3, wherein the first portion (260) of the first rod connector element (224) is rotationally fixed to the first aperture (214), and wherein the first portion of the second rod connector element (226) is rotationally fixed to the second aperture (216).

5. The battery crash protection arrangement of any one of the preceding claims, the battery crash protection arrangement further comprising an intermediate frame portion (240) extending in a longitudinal direction between respective first (242) and second (244) ends, the intermediate frame portion (240) being arranged between the third (208) and fourth (210) frame portions and extending from the first frame portion (204) to the second frame portion (206).

6. The battery crash protection arrangement of claim 5, the battery crash protection arrangement further comprising an intermediate rod (248) arranged in an intermediate aperture (246), the intermediate aperture (246) being arranged in the intermediate frame portion (240) and extending from the first end (242) of the intermediate frame portion.

7. The battery crash protection arrangement of claim 6, the battery crash protection arrangement further comprising an intermediate rod connector element (250) comprising a first portion rotationally connected to the intermediate rod (248), and a second portion, arranged on an opposite side compared to the first portion, the second portion being configured to connect to an intermediate secondary rod (548), wherein the intermediate rod connector element (250) protrudes out from the intermediate aperture (246).

8. The battery crash protection arrangement of any one of the preceding claims, further comprising a secondary crash protection frame (502), comprising a first secondary frame portion (504), a second secondary frame portion (506), a third secondary frame portion (508) and a fourth secondary frame portion (510) forming a secondary envelope frame (512), each of the first (504), second (506), third (508) and fourth (510) secondary frame portions extends in longitudinal direction between respective first (504', 506', 508', 510') and second (504'', 506", 508'', 510'') ends, each of the first and second secondary frame portions extends from the third secondary frame portion (508) to the fourth secondary frame portion (510).

9. The battery crash protection arrangement of claim 8, further comprising a secondary crash protection plate (600) spanning between the first (504), second (506), third (508) and fourth (510) secondary frame portions of the secondary envelope frame.

10. The battery crash protection arrangement of any one of claims 8 or 9, further comprising a first secondary aperture (514) and a second secondary aperture (516) arranged in the secondary crash protection frame (502), the first secondary aperture (514) being arranged in the third secondary frame portion (508) and extending from the first end (508') of the third secondary frame portion (508), and the second secondary aperture (516) being arranged in the fourth secondary frame portion (510) and extending from the first end (510') of the fourth secondary frame portion (510).

11. The battery crash protection arrangement of claim 10, further comprising the first (520) and second (522) secondary rods, the first secondary rod (520) being arranged in the first secondary aperture (514) and connected to the second portion (262) of the first rod connector element (224), and the second secondary rod (522) being arranged in the second secondary aperture (516) and connected to the second portion of the second rod connector element (226).

12. A vehicle (10) comprising a battery crash protection arrangement (200) of any one of the preceding claims.

13. The vehicle of claim 12, further comprising a traction battery (100), wherein the battery crash protection arrangement (200) is arranged vertically below the traction battery.

14. The vehicle of claim 13, wherein the traction battery is a first traction battery (101) connected to a first longitudinal frame member (52) of a pair of longitudinal frame members (50) of the vehicle, the vehicle further comprising a second traction battery (103) connected to a second longitudinal frame member (54) of the pair of longitudinal frame members (50), the first and second traction batteries being arranged on opposite lateral sides of the pair of longitudinal frame members and on same longitudinal position of the pair of longitudinal frame members.

15. A method of manufacturing a battery crash protection arrangement, the method comprising:
- extruding (S1) at least a first metal portion (802) and a second metal portion (804) to form a first longitudinally extending sheet of material with a first aperture (214) arranged at a first end (208') thereof, and a second longitudinally extending sheet of material with a second aperture (216) arranged at a first end (210') thereof,
- stamping (S2) the first and second metal portions to form a first frame portion (204), a second frame portion (206), a third frame portion (208) and a fourth frame portion (210),
- connecting (S3) the first frame portion of the first metal portion to the first frame portion of the second metal portion, and connecting the second frame portion of the first metal portion to the second frame portion of the second metal portion to form an envelope frame,
- spanning (S4) a crash protection plate to the envelope frame,
- connecting (S5) a first portion of a first rod connector element to a first rod,
- connecting (S6) a first portion of a second rod connector element to a second rod,
- inserting (S7) the first rod to the first aperture such that a second portion, arranged on an opposite side compared to the first portion, of the first rod connector element protrudes out from the first aperture, and
- inserting (S8) the second rod to the second aperture such that a second portion, arranged on an opposite side compared to the first portion, of the first rod connector element protrudes out from the second aperture.

## Patentansprüche

1. Batterie-Aufprallschutzanordnung (200) für eine Antriebsbatterie (100) eines Fahrzeugs (10), wobei die Batterie-Aufprallschutzanordnung Folgendes umfasst:
- einen Aufprallschutzrahmen (202), der einen ersten Rahmenabschnitt (204), einen zweiten Rahmenabschnitt (206), einen dritten Rahmenabschnitt (208) und einen vierten Rahmenabschnitt (210) umfasst, die einen Mantelrahmen (212) bilden, wobei sich der erste, der zweite, der dritte und der vierte Rahmenabschnitt jeweils in Längsrichtung zwischen einem jeweiligen ersten (204', 206', 208', 210') und zweiten (204", 206", 208", 210") Ende erstrecken, wobei sich der erste (204) und der zweite (206) Rahmenabschnitt jeweils vom dritten Rahmenabschnitt (208) zum vierten Rahmenabschnitt (210) erstrecken,
- eine Aufprallschutzplatte (300), wobei sich die Aufprallschutzplatte zwischen dem ersten (204), dem zweiten (206), dem dritten (208) und dem vierten (210) Rahmenabschnitt des Mantelrahmens erstreckt, wobei die Batterie-Aufprallschutzanordnung **dadurch gekennzeichnet ist, dass** sie ferner Folgendes umfasst:
- eine erste Stange (220), die in einer ersten Öffnung (214) des Aufprallschutzrahmens (202) angeordnet ist, wobei die erste Öffnung (214) im dritten Rahmenabschnitt (208) angeordnet ist und sich vom ersten Ende (208') des dritten Rahmenabschnitts erstreckt, und eine zweite Stange (222), die in einer zweiten Öffnung (216) des Aufprallschutzrahmens angeordnet ist, wobei die zweite Öffnung (216) im vierten Rahmenabschnitt (210) angeordnet ist und sich vom ersten Ende (210') des vierten Rahmenabschnitts erstreckt, und
- ein erstes Stangenverbindungselement (224), das einen ersten Abschnitt (260), der drehbar mit der ersten Stange (220) verbunden ist, und einen zweiten Abschnitt (262) umfasst, der im Verhältnis zum ersten Abschnitt an einer gegenüberliegenden Seite angeordnet ist, wobei der zweite Abschnitt (262) dazu konfiguriert ist, mit einer ersten sekundären Stange (520) verbunden zu sein, und ein zweites Stangenverbindungselement (226), das einen ersten Abschnitt, der drehbar mit der zweiten Stange verbunden ist, und einen zweiten Abschnitt (262) umfasst, der im Verhältnis zum ersten Abschnitt an einer gegenüberliegenden Seite angeordnet ist, wobei der zweite Abschnitt dazu konfiguriert ist, mit einer zweiten sekundären Stange (522) verbunden zu sein, wobei das erste Stangenverbindungselement (224) aus der ersten Öffnung (224) herausragt und das zweite Stangenverbindungselement (226) aus der zweiten Öffnung (226) herausragt.

2. Batterie-Aufprallschutzanordnung nach Anspruch 1, wobei sich die erste Öffnung (214) vom ersten Ende (208') in einer Richtung zum zweiten Ende (208'') des dritten Rahmenabschnitts (208) hin erstreckt, und wobei sich die zweite Öffnung (216) vom ersten Ende (210') in einer Richtung zum zweiten Ende (210") des vierten Rahmenabschnitts (210) hin erstreckt.

3. Batterie-Aufprallschutzanordnung nach einem der vorhergehenden Ansprüche, wobei der erste Abschnitt (260) des ersten Stangenverbindungselements (224) in der ersten Öffnung (214) angeordnet ist, und wobei der erste Abschnitt des zweiten Stangenverbindungselements (226) in der zweiten Öffnung (216) angeordnet ist.

4. Batterie-Aufprallschutzanordnung nach Anspruch 3, wobei der erste Abschnitt (260) des ersten Stangenverbindungselements (224) drehbar an der ersten Öffnung (214) befestigt ist, und wobei der erste Abschnitt des zweiten Stangenverbindungselements (226) drehbar an der zweiten Öffnung (216) befestigt ist.

5. Batterie-Aufprallschutzanordnung nach einem der vorhergehenden Ansprüche, wobei die Batterie-Aufprallschutzanordnung ferner einen Zwischenrahmenabschnitt (240) umfasst, der sich in einer Längsrichtung zwischen einem jeweiligen ersten (242) und zweiten (244) Ende erstreckt, wobei der Zwischenrahmenabschnitt (240) zwischen dem dritten (208) und dem vierten (210) Rahmenabschnitt angeordnet ist und sich vom ersten Rahmenabschnitt (204) zum zweiten Rahmenabschnitt (206) erstreckt.

6. Batterie-Aufprallschutzanordnung nach Anspruch 5, wobei die Batterie-Aufprallschutzanordnung ferner eine Zwischenstange (248) umfasst, die in einer Zwischenöffnung (246) angeordnet ist, wobei die Zwischenöffnung (246) im Zwischenrahmenabschnitt (240) angeordnet ist und sich vom ersten Ende (242) des Zwischenrahmenabschnitts erstreckt.

7. Batterie-Aufprallschutzanordnung nach Anspruch 6, wobei die Batterie-Aufprallschutzanordnung ferner ein Zwischenstangen-Verbindungselement (250) umfasst, das einen ersten Abschnitt, der drehbar mit der Zwischenstange (248) verbunden ist, und einen zweiten Abschnitt umfasst, der im Verhältnis zum ersten Abschnitt an einer gegenüberliegenden Seite angeordnet ist, wobei der zweite Abschnitt dazu konfiguriert ist, mit einer sekundären Zwischenstange (548) verbunden zu sein, wobei das Zwischenstangen-Verbindungselement (250) aus der Zwischenöffnung (246) herausragt.

8. Batterie-Aufprallschutzanordnung nach einem der vorhergehenden Ansprüche, die ferner einen sekundären Aufprallschutzrahmen (502) umfasst, der einen ersten sekundären Rahmenabschnitt (504), einen zweiten sekundären Rahmenabschnitt (506), einen dritten sekundären Rahmenabschnitt (508) und einen vierten sekundären Rahmenabschnitt (510) umfasst, die einen sekundären Mantelrahmen (512) bilden, wobei sich der erste (504), der zweite (506), der dritte (508) und der vierte (510) sekundäre Rahmenabschnitt jeweils in Längsrichtung zwischen den jeweiligen ersten (504', 506', 508', 510') und zweiten (504", 506", 508", 510") Enden erstrecken, wobei sich der erste und der zweite sekundäre Rahmenabschnitt jeweils vom dritten sekundären Rahmenabschnitt (508) zum vierten sekundären Rahmenabschnitt (510) erstrecken.

9. Batterie-Aufprallschutzanordnung nach Anspruch 8, die ferner eine sekundäre Aufprallschutzplatte (600) umfasst, die sich zwischen dem ersten (504), dem zweiten (506), dem dritten (508) und dem vierten (510) sekundären Rahmenabschnitt des sekundären Mantelrahmens aufspannt.

10. Batterie-Aufprallschutzanordnung nach einem der Ansprüche 8 oder 9, die ferner eine erste sekundäre Öffnung (514) und eine zweite sekundäre Öffnung (516) umfasst, die im sekundären Aufprallschutzrahmen (502) angeordnet sind, wobei die erste sekundäre Öffnung (514) im dritten sekundären Rahmenabschnitt (508) angeordnet ist und sich vom ersten Ende (508') des dritten sekundären Rahmenabschnitts (508) erstreckt, und wobei die zweite sekundäre Öffnung (516) im vierten sekundären Rahmenabschnitt (510) angeordnet ist und sich vom ersten Ende (510') des vierten sekundären Rahmenabschnitts (510) erstreckt.

11. Batterie-Aufprallschutzanordnung nach Anspruch 10, die ferner die erste (520) und die zweite (522) sekundäre Stange umfasst, wobei die erste sekundäre Stange (520) in der ersten sekundären Öffnung (514) angeordnet und mit dem zweiten Abschnitt (262) des ersten Stangenverbindungselements (224) verbunden ist, und wobei die zweite sekundäre Stange (522) in der zweiten sekundären Öffnung (516) angeordnet und mit dem zweiten Abschnitt des zweiten Stangenverbindungselements (226) verbunden ist.

12. Fahrzeug (10), das eine Batterie-Aufprallschutzanordnung (200) nach einem der vorhergehenden Ansprüche umfasst.

13. Fahrzeug nach Anspruch 12, das ferner eine Antriebsbatterie (100) umfasst, wobei die Batterie-Aufprallschutzanordnung (200) vertikal unterhalb der Antriebsbatterie angeordnet ist.

14. Fahrzeug nach Anspruch 13, wobei die Antriebsbatterie eine erste Antriebsbatterie (101) ist, die mit einem ersten Längsrahmenelement (52) eines Paars von Längsrahmenelementen (50) des Fahrzeugs verbunden ist, wobei das Fahrzeug ferner eine zweite Antriebsbatterie (103) umfasst, die mit einem zweiten Längsrahmenelement (54) des Paars von Längsrahmenelementen (50) verbunden ist, wobei die erste und die zweite Antriebsbatterie an gegenüberliegenden lateralen Seiten des Paars von Längsrahmenelementen und an derselben Längsposition des Paars von Längsrahmenelementen angeordnet sind.

15. Verfahren zum Herstellen einer Batterie-Aufprallschutzanordnung, wobei das Verfahren Folgendes umfasst:
- Extrudieren (S1) mindestens eines ersten Metallabschnitts (802) und eines zweiten Metallabschnitts (804), um eine sich längs erstreckende erste Materialplatte mit einer ersten Öffnung (214), die an einem ersten Ende (208') davon angeordnet ist, und eine sich längs erstreckende zweite Materialplatte mit einer zweiten Öffnung (216), die an einem ersten Ende (210') davon angeordnet ist, zu bilden,
- Stanzen (S2) des ersten und des zweiten Metallabschnitts, um einen ersten Rahmenabschnitt (204), einen zweiten Rahmenabschnitt (206), einen dritten Rahmenabschnitt (208) und einen vierten Rahmenabschnitt (210) zu bilden,
- Verbinden (S3) des ersten Rahmenabschnitts des ersten Metallabschnitts mit dem ersten Rahmenabschnitt des zweiten Metallabschnitts, und Verbinden des zweiten Rahmenabschnitts des ersten Metallabschnitts mit dem zweiten Rahmenabschnitt des zweiten Metallabschnitts, um einen Mantelrahmen zu bilden,
- Aufspannen (S4) einer Aufprallschutzplatte auf den Mantelrahmen,
- Verbinden (S5) eines ersten Abschnitts eines ersten Stangenverbindungselements mit einer ersten Stange,
- Verbinden (S6) eines ersten Abschnitts eines zweiten Stangenverbindungselements mit einer zweiten Stange,
- Einführen (S7) der ersten Stange in die erste Öffnung, so dass ein zweiter Abschnitt des ersten Stangenverbindungselements, der im Verhältnis zum ersten Abschnitt an einer gegenüberliegenden Seite angeordnet ist, aus der ersten Öffnung herausragt, und
- Einführen (S8) der zweiten Stange in die zweite Öffnung, so dass ein zweiter Abschnitt des ersten Stangenverbindungselements, der im Verhältnis zum ersten Abschnitt an einer gegenüberliegenden Seite angeordnet ist, aus der zweiten Öffnung herausragt.

## Revendications

1. Agencement de protection contre les chocs de batterie (200) pour une batterie de traction (100) d'un véhicule (10), l'agencement de protection contre les chocs de batterie comprenant :
- un cadre de protection contre les chocs (202) comprenant une première partie de cadre (204), une deuxième partie de cadre (206), une troisième partie de cadre (208) et une quatrième partie de cadre (210) formant un cadre enveloppant (212), chacune des première, deuxième, troisième et quatrième parties de cadre s'étendant dans le sens longitudinal entre des première (204', 206', 208', 210') et seconde (204", 206", 208", 210") extrémités respectives, chacune des première (204) et seconde (206) parties de cadre s'étendant de la troisième partie de cadre (208) à la quatrième partie de cadre (210),
- une plaque de protection contre les chocs (300), la plaque de protection contre les chocs s'étendant entre les première (204), deuxième (206), troisième (208) et quatrième (210) parties de cadre du cadre enveloppant, l'agencement de protection contre les chocs de batterie étant **caractérisé en ce qu'**il comprend en outre
- une première tige (220) disposée dans une première ouverture (214) du cadre de protection contre les chocs (202), la première ouverture (214) étant disposée dans la troisième partie de cadre (208) et s'étendant à partir de la première extrémité (208') de la troisième partie de cadre, et une seconde tige (222) disposée dans une seconde ouverture (216) du cadre de protection contre les chocs, la seconde ouverture (216) étant disposée dans la quatrième partie de cadre (210) et s'étendant à partir de la première extrémité (210') de la quatrième partie de cadre, et
- un premier élément connecteur de tige (224) comprenant une première partie (260) reliée de manière à pouvoir tourner à la première tige (220), et une seconde partie (262), disposée sur un côté opposé à la première partie, la seconde partie (262) étant configurée pour se raccorder à une première tige secondaire (520), et un second élément connecteur de tige (226) comprenant une première partie reliée de manière à pouvoir tourner à la seconde tige, et une seconde partie (262), disposée sur un côté opposé à la première partie, la seconde partie étant configurée pour se connecter à une seconde tige secondaire (522), le premier élément connecteur de tige (224) faisant saillie hors de la première ouverture (224) et le second élément connecteur de tige (226) faisant saillie hors de la seconde ouverture (226).

2. Agencement de protection contre les chocs de batterie selon la revendication 1, dans lequel la première ouverture (214) s'étend depuis la première extrémité (208') dans une direction vers la seconde extrémité (208") de la troisième partie de cadre (208), et dans lequel la seconde ouverture (216) s'étend depuis la première extrémité (210') dans une direction vers la seconde extrémité (210") de la quatrième partie de cadre (210) .

3. Agencement de protection contre les chocs de batterie selon l'une quelconque des revendications précédentes, dans lequel la première partie (260) du premier élément connecteur de tige (224) est agencée dans la première ouverture (214), et dans lequel la première partie du second élément connecteur de tige (226) est agencée dans la seconde ouverture (216).

4. Agencement de protection en cas d'accident de batterie selon la revendication 3, dans lequel la première partie (260) du premier élément connecteur de tige (224) est fixée de manière à pouvoir tourner à la première ouverture (214), et dans lequel la première partie du second élément connecteur de tige (226) est fixée de manière à pouvoir tourner à la seconde ouverture (216).

5. Agencement de protection contre les chocs de batterie selon l'une quelconque des revendications précédentes, l'agencement de protection contre les chocs de batterie comprenant en outre une partie de cadre intermédiaire (240) s'étendant dans une direction longitudinale entre des première (242) et seconde (244) extrémités respectives, la partie de cadre intermédiaire (240) étant agencée entre les troisième (208) et quatrième (210) parties de cadre et s'étendant de la première partie de cadre (204) à la deuxième partie de cadre (206).

6. Agencement de protection contre les chocs de batterie selon la revendication 5, l'agencement de protection contre les chocs de batterie comprenant en outre une tige intermédiaire (248) agencée dans une ouverture intermédiaire (246), l'ouverture intermédiaire (246) étant agencée dans la partie de cadre intermédiaire (240) et s'étendant à partir de la première extrémité (242) de la partie de cadre intermédiaire.

7. Agencement de protection contre les chocs de batterie selon la revendication 6, l'agencement de protection contre les chocs de batterie comprenant en outre un élément connecteur de tige intermédiaire (250) comprenant une première partie connectée de manière à pouvoir tourner à la tige intermédiaire (248), et une seconde partie, agencée sur un côté opposé à la première partie, la seconde partie étant configurée pour se connecter à une tige secondaire intermédiaire (548), l'élément connecteur de tige intermédiaire (250) faisant saillie hors de l'ouverture intermédiaire (246).

8. Agencement de protection contre les chocs de batterie selon l'une quelconque des revendications précédentes, comprenant en outre un cadre de protection contre les chocs secondaire (502), comprenant une première partie de cadre secondaire (504), une deuxième partie de cadre secondaire (506), une troisième partie de cadre secondaire (508) et une quatrième partie de cadre secondaire (510) formant un cadre enveloppant secondaire (512), chacune des première (504), deuxième (506), troisième (508) et quatrième (510) parties de cadre secondaire s'étendant dans la direction longitudinale entre les première (504', 506', 508', 510') et seconde (504", 506", 508", 510") extrémités, chacune des première et deuxième parties de cadre secondaire s'étendant de la troisième partie de cadre secondaire (508) à la quatrième partie de cadre secondaire (510).

9. Agencement de protection contre les chocs de batterie selon la revendication 8, comprenant en outre une plaque de protection contre les chocs secondaire (600) s'étendant entre les première (504), deuxième (506), troisième (508) et quatrième (510) parties de cadre secondaire du cadre d'enveloppe secondaire.

10. Agencement de protection contre les chocs de batterie selon l'une quelconque des revendications 8 ou 9, comprenant en outre une première ouverture secondaire (514) et une seconde ouverture secondaire (516) agencées dans le cadre de protection secondaire contre les chocs (502), la première ouverture secondaire (514) étant disposée dans la troisième partie de cadre secondaire (508) et s'étendant depuis la première extrémité (508') de la troisième partie de cadre secondaire (508), et la seconde ouverture secondaire (516) étant disposée dans la quatrième partie de cadre secondaire (510) et s'étendant depuis la première extrémité (510') de la quatrième partie de cadre secondaire (510).

11. Agencement de protection contre les chocs de batterie selon la revendication 10, comprenant en outre les première (520) et seconde (522) tiges secondaires, la première tige secondaire (520) étant agencée dans la première ouverture secondaire (514) et connectée à la seconde partie (262) du premier élément connecteur de tige (224), et la seconde tige secondaire (522) étant agencée dans la seconde ouverture secondaire (516) et connectée à la seconde partie du second élément connecteur de tige (226).

12. Véhicule (10) comprenant un agencement de protection de batterie contre les chocs (200) selon l'une quelconque des revendications précédentes.

13. Véhicule selon la revendication 12, comprenant en outre une batterie de traction (100), l'agencement de protection contre les chocs de batterie (200) étant agencé verticalement au-dessous de la batterie de traction.

14. Véhicule selon la revendication 13, dans lequel la batterie de traction est une première batterie de traction (101) connectée à un premier élément de cadre longitudinal (52) d'une paire d'éléments de cadre longitudinaux (50) du véhicule, le véhicule comprenant en outre une seconde batterie de traction (103) connectée à un second élément de cadre longitudinal (54) de la paire d'éléments de cadre longitudinaux (50), les première et seconde batteries de traction étant disposées sur des côtés latéraux opposés de la paire d'éléments de cadre longitudinaux et sur la même position longitudinale de la paire d'éléments de cadre longitudinaux.

15. Procédé de fabrication d'un agencement de protection contre les chocs de batterie, le procédé comprenant :
- l'extrusion (S1) d'au moins une première partie métallique (802) et d'une seconde partie métallique (804) pour former une première feuille de matériau s'étendant longitudinalement avec une première ouverture (214) disposée à une première extrémité (208') de celle-ci, et une seconde feuille de matériau s'étendant longitudinalement avec une seconde ouverture (216) disposée à une première extrémité (210') de celle-ci,
- l'estampage (S2) des première et seconde parties métalliques pour former une première partie de cadre (204), une deuxième partie de cadre (206), une troisième partie de cadre (208) et une quatrième partie de cadre (210),
- le raccordement (S3) de la première partie de cadre de la première partie métallique à la première partie de cadre de la seconde partie métallique, et le raccordement de la deuxième partie de cadre de la première partie métallique à la deuxième partie de cadre de la seconde partie métallique pour former un cadre enveloppant,
- la pose (S4) d'une plaque de protection contre les chocs sur le cadre enveloppant,
- le raccordement (S5) d'une première partie d'un premier élément connecteur de tige à une première tige,
- le raccordement (S6) d'une première partie d'un second élément connecteur de tige à une seconde tige,
- l'insertion (S7) de la première tige dans la première ouverture de sorte qu'une seconde partie, disposée sur un côté opposé à la première partie, du premier élément connecteur de tige dépasse de la première ouverture, et
- l'insertion (S8) de la seconde tige dans la seconde ouverture de sorte de sorte qu'une seconde partie, disposée sur un côté opposé à la première partie, du premier élément connecteur de tige, dépasse de la seconde ouverture.
